# FASCICULE DE BREVET EUROPEEN

(11) **EP 3 264 940 B1**
(45) Date de publication et mention de la délivrance du brevet: **28.11.2018**
(21) Numéro de dépôt: 16713508.6
(22) Date de dépôt: 25.02.2016
(51) Int. Cl.: A47B 88/40, B60N 2/07

(54) **GLISSIÈRE POUR DES SYSTÈMES DE RÉGLAGE COULISSANTS**
SCHIEBER FÜR SCHIEBBARE EINSTELLUNGSSYSTEME
SLIDE FOR SLIDABLE ADJUSTMENT SYSTEMS

(30) Priorité: 26.02.2015 FR 1500382
(43) Date de publication de la demande: 10.01.2018
(73) Titulaire: Servitronique, 61100 Flers (FR)
(72) Inventeur: CASTAGNA, Stéphane, 61100 Flers-France (FR); ROHEE, René, 61100 Flers-France (FR)
(74) Mandataire: Cabinet Laurent & Charras
(86) Numéro de dépôt international: PCT/FR2016/000029
(87) Numéro de publication internationale: WO 2016/135389

(56) Documents cités:
- EP-A1- 2 586 648
- FR-A1- 2 879 138
- FR-A1- 2 899 523
- FR-A1- 2 930 203

## Description

La présente invention est relative aux glissières utilisées dans les systèmes coulissants tels que, par exemple, des tiroirs de meuble ou des sièges de véhicules automobiles.

Elle concerne plus particulièrement une glissière comportant un profilé fixe, destiné à être solidarisé sur un châssis et s'étendant sur un axe longitudinal, ledit profilé fixe ayant une partie centrale et deux parties latérales, un profilé mobile destiné à être fixé à un élément à déplacer et guidé par le profilé fixe selon l'axe longitudinal, ce profilé mobile comprenant :
- une partie centrale à section en U, ouvert vers la partie centrale du profilé fixe,
- des premier et deuxième flancs latéraux s'étendant en direction de la partie centrale du profilé fixe,
- des première et deuxième ailes s'étendant à l'opposé l'une de l'autre, depuis la partie inférieure des premier et deuxième flancs latéraux,
- une plaque de liaison munie à une extrémité d'une partie saillante traversant la partie centrale du profilé mobile pour assurer la fixation d'un élément à déplacer et, à son autre extrémité, d'une partie pénétrante insérée entre les deux flancs latéraux du profilé mobile.

On connait déjà une telle glissière, notamment pour sièges de véhicules automobiles, décrite dans la demande de brevet FR 2930203.

La glissière décrite dans cette demande de brevet comporte une plaque de liaison ayant une partie pénétrante encastrée par pivotement dans l'âme centrale du profilé mobile et fixée sur cette âme centrale par poinçonnement.

Un tel dispositif présente plusieurs inconvénients :
- La plaque de liaison nécessite une découpe de forme complexe et précise avec introduction possible uniquement par le dessus du profilé,
- L'introduction de la plaque de liaison se fait par pivotement et donc s'il y a plusieurs plaques de liaison sur un profilé, chaque plaque doit être montée séparément,
- Après positionnement de la plaque de liaison, une opération d'immobilisation doit être réalisée, ce qui peut engendrer des risques de déformation du profilé,
- La plaque de liaison ne participe pas à la rigidité des ailes latérales.

La glissière décrite dans la demande de brevet FR 2889523 comporte un profilé mobile muni en son centre d'une rainure spécifique apte à recevoir la plaque de liaison, la plaque de liaison étant soudée au-dessus de la rainure, en deux points de soudure, un de chaque côté de la plaque de liaison.

Un tel dispositif présente également plusieurs inconvénients :
- L'ajout de la rainure centrale du profilé mobile augmente la largeur du profilé et ne permet pas la réalisation de profilé de faible largeur
- La faible hauteur d'encastrement nécessite un montage serré, sans jeu, de la plaque de liaison dans la rainure du profilé, tout en n'assurant pas efficacement une résistance à l'arrachement sous des forces latérales importantes,
- L'introduction de la plaque de liaison sur le profilé ne peut être réalisée que par le dessus du profilé,
- La plaque de liaison ne participe pas à la rigidité de la première et deuxième ailes latérales.
- La plaque de liaison n'est pas soudée au profilé mobile par une soudure unique et continue d'un flanc à l'autre du profilé mobile

La présente invention a notamment pour but de pallier ces inconvénients et de perfectionner les deux glissières décrites précédemment pour les rendre plus faciles à assembler, tout en améliorant la résistance et la géométrie du profilé mobile et de la plaque de liaison, une fois les deux assemblés.

A cet effet, selon l'invention, une glissière du genre en question est caractérisée en ce que la partie pénétrante de la plaque de liaison est solidarisée au profilé mobile, à la jonction de la partie inférieure des flancs latéraux de ce profilé mobile et des ailes de ce profilé, par une soudure continue d'un bord inférieur d'un flanc latéral au bord inférieur de l'autre flanc latéral.

Grâce à ces dispositions, la plaque de liaison est assemblée simplement dans le profilé mobile et la réalisation d'un cordon de soudure transversal immobilise la plaque de liaison et renforce la résistance à l'écartement des deux ailes du profilé mobile.

Dans divers modes de réalisation de l'invention, on peut éventuellement avoir recours à l'une et/ou l'autre des dispositions suivantes :
- La soudure comporte un ou plusieurs cordons.
- La ou les soudures sont du type MIG, MAG, TIG, ou LASER.
- La partie saillante comporte un talon servant de butée de fin de course pour la glissière.

Selon un autre aspect, l'invention se rapporte à un procédé d'assemblage d'une telle glissière, comprenant au moins les étapes suivantes :
- emboutissage d'un profilé dit profilé fixe, destiné à être fixé sur un châssis,
- emboutissage d'un profilé dit profilé mobile, destiné à être fixé à un élément à déplacer
- emboutissage d'une plaque de liaison,
- positionnement, sur un outil d'assemblage, du profilé mobile, permettant de maintenir les ailes à une cote d'écartement précise,
- introduction de la plaque de liaison dans la partie centrale du profilé mobile par un mouvement -sensiblement - perpendiculaire à l'axe longitudinal l'extrémité inférieure de là partie pénétrante de la plaque de liaison venant au niveau de la jonction entre les ailes et la partie inférieure des flancs du profilé mobile,
- réalisation d'au moins un cordon de soudure, continu, au niveau de la jonction,
- extraction de l'ensemble soudé de l'outil d'assemblage.

Selon une autre caractéristique, au moins deux cordons de soudure peuvent être réalisés, un à chaque extrémité latérale, selon l'axe X, de la partie saillante.

D'autres aspects, buts et avantages de l'invention apparaitront à la lecture de la description suivante d'un de ses modes de réalisation, donné à titre d'exemple non limitatif. L'invention sera également mieux comprise en regard des dessins joints sur lesquels :
- La figure 1 est une vue schématique de côté d'une glissière selon l'invention.
- La figure 2 est une vue éclatée en perspective d'un premier mode de réalisation de la glissière selon l'invention.
- La figure 3 est une vue en coupe de la glissière de la figure 2, selon la ligne de coupe III-III de la figure 2.
- La figure 4 est une vue en coupe de la glissière de la figure 2, selon la ligne de coupe IV-IV de la figure 3.
- La figure 5 est une vue en perspective du profilé mobile seul, sans la plaque de liaison.
- La figure 6 est une vue similaire à la figure 4, montrant le profilé mobile et la plaque de liaison assemblés et soudés.
- La figure 7 est une figure analogue à la figure 3, illustrant une première variante de la plaque de liaison.
- La figure 8 est une figure analogue à la figure 3, illustrant une deuxième variante de la plaque de liaison venant en appui sur le dessus de l'âme centrale.
- La figure 9 est une figure analogue à la figure 3, illustrant une troisième variante de la plaque de liaison venant en appui à l'intérieur de l'âme centrale.
- La figure 10 est une vue schématique illustrant le procédé de mise en position des différents éléments de la glissière, et de soudure subséquente.

Sur les différentes figures, les mêmes références désignent des éléments identiques ou similaires,

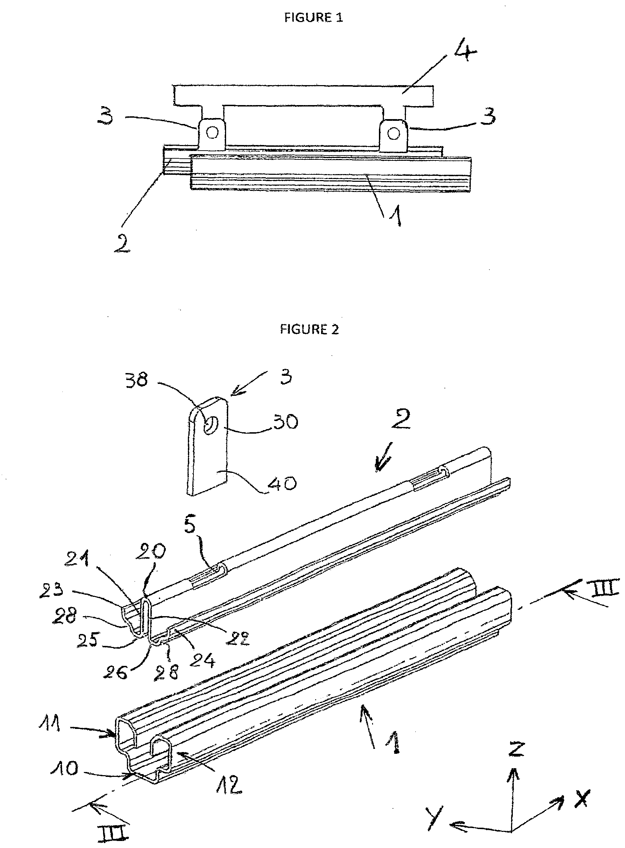

La figure 1 représente de manière très schématique un élément à déplacer (4), tel qu'un tiroir de meuble ou un siège, par exemple. Ledit élément est apte à être déplacé selon la direction longitudinale par l'intermédiaire d'au moins une glissière comprenant un profilé fixe (1) solidaire d'un support, et un profilé mobile (2) relié à l'élément à déplacer par deux plaques de liaison (3).

Comme cela est particulièrement visible sur la figure 2, le profilé fixe (1), présente une section générale en forme de U avec une base centrale (10) et des ailes (11), (12) s'étendant de part et d'autre de cette base centrale (10), ces ailes étant recourbées à leur extrémité vers l'intérieur du U. Ces ailes (11), (12) servent de chemin de roulement à des billes qui seront décrites ultérieurement. Ce premier profilé est fixé à un support par des-moyens connus de-l'art mais il pourrait tout aussi bien être fixé à un autre élément, y compris dans une direction différente de la direction horizontale.

Ce premier profilé (1) constitue le berceau dans lequel est reçu le second profilé (2) également illustré sur la figure 2 et les suivantes.

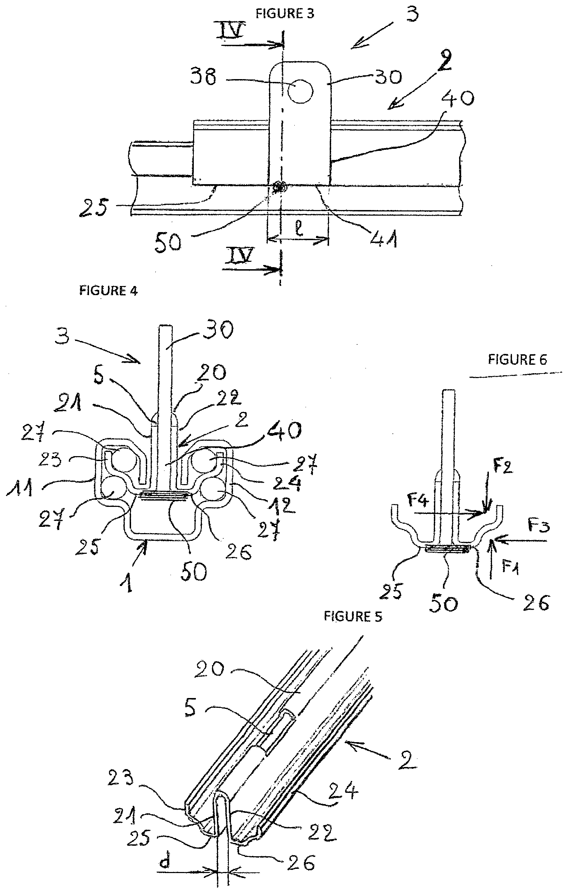

Ce profilé (2) dit mobile s'étend selon la direction longitudinale X et comprend une partie centrale (20) en forme de U ouvert vers la partie centrale (10) du premier profilé (1), des flancs latéraux (21), (22) sensiblement parallèles entre eux, et des ailes latérales (23), (24) qui prolongent les flancs latéraux vers l'extérieur, de part et d'autre de cette partie centrale (20) en forme de U. Ces ailes sont courbées puis terminées par une extrémité parallèle aux flancs latéraux, comme cela est bien visible sur les figures 4 et 6.

Les flancs latéraux (21), (22) s'étendent à partir de l'âme (20) en direction de la partie centrale (10) du profilé (1). Ces flans latéraux possèdent à leur partie inférieure un cambrage à 90° formant des départs (25), (26) des ailes (23), (24) sensiblement parallèle à la base centrale (10), dirigé vers l'extérieur et se prolongeant chacun par une forme (28) apte à recevoir les chemins de roulement et de guidage. Entre les ailes du profilé fixe et celles du profilé mobile, des billes (27), qui peuvent être remplacées par des tiges cylindriques en métal ou en plastique, assurent le guidage et le coulissement du profilé mobile le long du profilé fixe.

En outre, l'âme (20) de ce deuxième profilé (2) comporte au moins un orifice traversant (5) de forme générale rectangulaire dont la longueur s'étend selon la direction longitudinale X et la largeur selon la direction transversale Y. Ces premier et deuxième profilés (1), (2) sont des pièces rigides réalisées généralement en acier d'épaisseur et de caractéristiques variables ou en alliage d'aluminium, et sont assemblés l'un dans l'autre, comme le montre la figure 4.

La glissière selon l'invention comporte en outre au moins une plaque de liaison (3), représentée notamment en figure 2. Cette plaque de liaison (3) est une plaque rigide, par exemple plane, mais une autre forme est également possible sans sortir du cadre de l'invention.

Cette plaque de liaison comprend une partie saillante (30), assurant la fixation d'un élément à déplacer (4) et au moins une partie pénétrante (40) insérée dans le deuxième profilé (2).

La partie saillante (30) comprend des moyens de fixation appropriés d'un tiroir ou d'un siège, comme par exemple un trou (38) permettant le passage d'un boulon.

La partie pénétrante (40) de la plaque de liaison (3) a une épaisseur constante et inférieure de 0.1 à 1 mm à la largeur d de la figure 5, disponible à l'intérieur des premier et deuxième flancs latéraux (21), (22) et une longueur l de la figure 3 également inférieure de 0.1 à 0.5 mm à la longueur de l'orifice traversant (5) réalisé sur l'âme (20) du profilé (2).

Comme visible sur la figure 3, dans un premier mode de réalisation de l'invention, la plaque de liaison (3) traverse entièrement l'orifice traversant (5) de l'âme (20) du profilé mobile (2). La mise en place de ladite plaque de liaison (3) peut s'effectuer par le dessus du profilé (2) ou par le dessous.

L'extrémité (41) de la partie pénétrante (40) est sensiblement alignée avec les départs d'aile (25), (26) du profilé mobile (2)

Comme visible sur les figures 3, 4 et 6 l'extrémité (41) de la partie pénétrante (40) et les deux départs d'aile définissent au moins une zone de soudure transversale selon la direction Y du profilé (2). Un cordon de soudure (50) est réalisé dans cette zone par tout procédé connu de type MIG, MAG,TIG ou Laser avec ou sans apport de matière. La section du cordon de soudure (50) est dimensionnée suivant les résistances déterminées, et il est à noter que plusieurs cordons peuvent être réalisés sur la même extrémité inférieure (41). Cette disposition permet simultanément de :
- solidariser la plaque de liaison (3) au profilé (2) de manière efficace.
- garantir et de maintenir la géométrie des deux ailes latérales (23) et (24) dans une position figée dont la mise en place sera décrite dans le procédé d'assemblage.
- Améliorer par ce cordon de soudure (50) débordant sous les départs d'aile, la résistance et le maintien de la géométrie du profilé mobile lors des sollicitations extrêmes appliquées aux chemins de roulement lors de l'utilisation d'un siège par exemple.

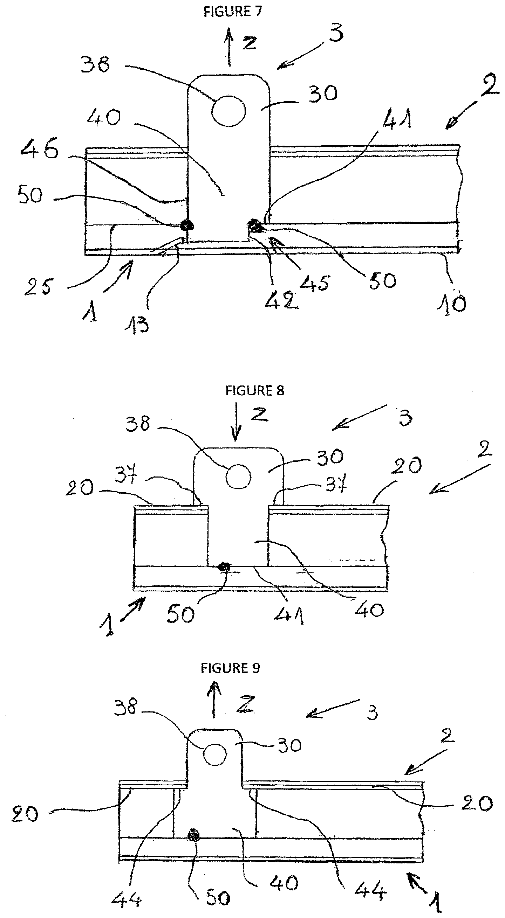

Une variante est présentée sur la figure 7. Dans cette variante, l'extrémité inférieure (41) de la partie pénétrante (40) possède un épaulement (42) permettant de positionner le cordon de soudure dans l'angle (45) formé par l'extrémité (41) et par l'épaulement (42). Dans ce cas le cordon transversal (50) installé dans cet angle (45) se comporte comme une clavette et améliore la tenue à l'arrachement suivant la direction Z de la plaque de liaison (3). Dans une autre variante, le cordon de soudure (50) peut être positionné sur le côté (46) de la partie pénétrante (40) et venir se prolonger sur les départs d'aile (26), (27) du profilé (2).

En outre dans cette figure 7 l'extrémité pénétrante (40) comprend une projection (42) qui s'étend en direction de la partie centrale (10) du profilé fixe (1) pour coopérer avec un élément de butée (13) solidaire du profilé fixe (1), et ainsi créer une limitation de la course du profilé mobile (2). Ceci empêche aussi tout déboîtement du profilé mobile (2) par rapport au profilé fixe (1).

La figure 8 présente une autre variante dans laquelle la plaque de liaison (3) présente une zone d'appui externe (37) venant au contact de la partie supérieure de l'âme centrale (20). Dans ce cas seule l'introduction par le dessus est possible.

Cette variante permet à la plaque de liaison (3) de venir réactionner sur la partie centrale (20) par les épaulements (37) de ladite plaque de liaison (3) en cas de charge importante suivant le sens Z-..

La figure 9 présente une autre variante dans laquelle la plaque de liaison (3) présente une zone d'appui interne (44) venant au contact de la partie inférieure de l'âme centrale (20). Dans ce cas seule l'introduction par le dessous est possible.

Cette variante permet à la plaque de liaison (3) de venir réactionner sous la partie centrale (20) par les épaulements (44) de ladite plaque de liaison (3) en cas de traction importante suivant le sens Z+.

Comme déjà précisé l'épaisseur de la plaque de liaison inférieure à l'écartement entre les deux flancs latéraux (21), (22), n'a pas besoin d'être définie précisément, ce qui permet de définir ladite épaisseur au juste nécessaire de la résistance souhaitée. En outre cette disposition avec un jeu d'emboitement significatif permet un assemblage très facile et par le procédé d'assemblage un calibrage de l'écartement des deux flancs latéraux.

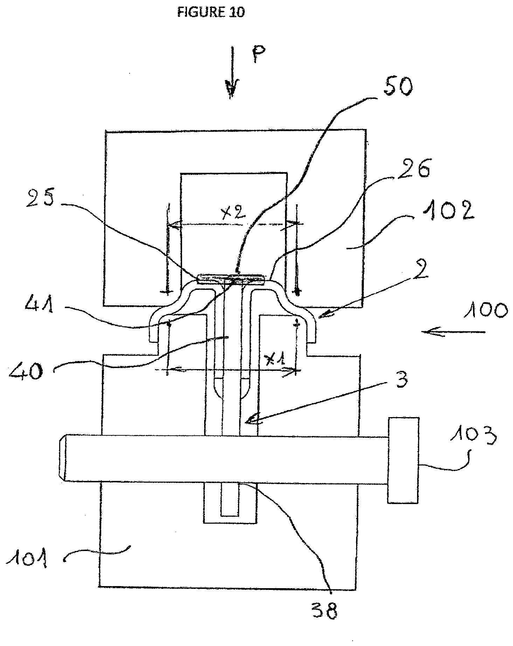

Le procédé d'assemblage va maintenant être décrit notamment en se référant à la figure 10.

La première étape du procédé d'assemblage consiste à positionner le profilé (2) dans une matrice (101) présentant la forme théorique finale au niveau du chemin de roulement défini pour le coulissement des billes ou cylindres (27) visibles sur la figure 4, position du chemin de roulement définie suivant la cote X1.

L'étape suivante consiste à introduire, dans le profilé (2), la plaque de liaison (3). Comme cette figure 10 montre le profilé (2) en position inversée par rapport à la figure 6, cette plaque de liaison (3) peut être introduite par le dessus du montage, suivant la forme définie sur la figure 9, ou par le dessous du montage, suivant la forme définie sur la figure 8, .ou par le dessous ou le dessus, suivant la forme définie dans les figures 3 et 7. Cette plaque de liaison peut être positionnée, par exemple, à un endroit optimisé par l'introduction d'une goupille (103) dans le trou (38) servant à fixer le profilé 2 sur l'élément à déplacer.

L'étape suivante consiste à venir mettre en pression, à l'aide d'un vérin ou tout autre moyen connu de l'art et suivant la force P, l'élément presseur supérieur (102) qui est parfaitement guidé et aligné avec la matrice (101) afin de venir plaquer le profilé (2) dans la position théorique définie. Cette opération permet de garantir la cote du chemin de roulement finale au niveau du chemin de roulement défini pour le coulissement des billes ou cylindres (27) visibles sur la figure 4, position du chemin de roulement définie suivant la cote x2.

Ces dispositions permettent d'agir comme un moule et de venir mettre en position le profilé dans sa position théorique de fonctionnement, ce qui présente l'avantage d'accepter des tolérances plus importantes pour la réalisation du profilé mobile (2).

Dans cette position, la partie pénétrante (40) de la plaque (3) présente une extrémité (41) alignée horizontalement avec les départs d'ailes (25), (26).

L'étape suivante consiste à réaliser le cordon transversal de soudure (50) en reliant simultanément les deux départs d'ailes (25), (26) et l'extrémité (41) de la plaque (3). Cette soudure peut être réalisée par tout moyen de soudure connu de manière préférentielle avec apport de type Mig, Mag, mais également avec ou sans apport par procédé Tig ou laser.

Les dernières étapes consistent à :
- retirer l'élément presseur supérieur afin de dégager la partie supérieure (102),
- à retirer la goupille inférieure (103) pour désolidariser la plaque de liaison du montage,
- extraire le profilé (2) équipé de la plaque de liaison (3).

Bien sûr, le mode décrit est un mode préférentiel, tout autre système ou montage peut être envisagé.

Ce procédé permet de figer l'écartement des deux flancs latéraux, donc des deux ailes, et la cote du chemin de roulement du profilé mobile. Il permet aussi de solidariser de manière simple la plaque de liaison au dit profilé mobile et d'améliorer la résistance des départs d'ailes par la présence débordante du ou des cordons de soudure

## Revendications

1. Glissière comprenant un profilé fixe (1), destiné à être solidarisé sur un châssis et s'étendant sur un axe longitudinal (X), ledit profilé fixe (1) ayant une partie centrale (10) et deux parties latérales (11), (12), un profilé mobile (2) destiné à être fixé à un élément à déplacer et guidé par le profilé fixe selon l'axe longitudinal (X), ce profilé mobile (2) comprenant :
- une partie centrale(20) à section en U, ouvert vers la partie centrale (10) du profilé fixe (1),
- des premier et deuxième flancs latéraux (21), (22) s'étendant en direction de la partie centrale du profilé fixe,
- des première et deuxième ailes (23), (24) s'étendant à l'opposé l'une de l'autre, depuis la partie inférieure des premier et deuxième flancs latéraux
- une plaque de liaison (3) munie à une extrémité d'une partie saillante (30) traversant la partie centrale du profilé mobile pour assurer la fixation d'un élément à déplacer et, à son autre extrémité, une partie pénétrante (40) insérée entre les deux flancs du profilé mobile,
**caractérisée en ce que** la partie pénétrante (40) de la plaque de liaison est solidarisée au profilé mobile(2), à la jonction de la partie inférieure des flancs latéraux de ce profilé mobile et des ailes de ce profilé par une soudure continue d'un bord inférieur d'un flanc latéral au bord inférieur de l'autre flanc latéral.

2. Glissière selon la revendication 1, **caractérisée en ce que** la soudure comporte un ou plusieurs cordons.

3. Glissière selon la revendication 2, **caractérisée en ce que** la ou les soudures sont du type MIG, MAG, TIG ou LASER, avec ou sans apport.

4. Glissière selon l'une des revendications précédentes, dans laquelle la partie saillante comporte un talon (42) servant de butée de fin de course pour la glissière.

5. Procédé de fabrication d'une glissière selon l'une des revendications précédentes, dans lequel on réalise les opérations suivantes :
- emboutissage d'un profilé (1) dit profilé fixe, destiné à être fixé sur un châssis,
- emboutissage d'un profilé (2) dit profilé mobile, destiné à être fixé à un élément à déplacer,
- emboutissage d'une plaque de liaison,
- positionnement, sur un outil d'assemblage, de profilé mobile, permettant de maintenir les deux ailes à une cote d'écartement précise,
- introduction de la plaque de liaison dans la partie centrale du profilé mobile par un mouvement sensiblement perpendiculaire à l'axe longitudinal (X) l'extrémité inférieure de la partie pénétrante de la plaque de liaison venant au niveau de la jonction entre les ailes et la partie inférieure des flancs du profilé mobile,
- réalisation au moins d'un cordon de soudure, continu, au niveau de la jonction,
- extraction de l'ensemble soudé de l'outil d'assemblage ;

6. Procédé selon la revendication 5 dans lequel on réalise au moins deux cordons de soudure, un à chaque extrémité latérale, selon l'axe X, de la partie saillante.

## Patentansprüche

1. Gleitschiene mit einem festen Profilelement (1), das an einem Rahmen befestigt werden soll und entlang einer Längsachse (X) verläuft, dieses feste Profilelement (1), hat einen zentralen Teil (10) und zwei Seitenteile (11), (12), ein bewegliches Profilelement (2), das an einem zu bewegenden Element befestigt werden soll und vom festen Profilelement entlang der Längsachse (X) geführt wird, dieses bewegliche Profilelement (2) umfasst:
- einen zentralen Teil (20) mit einem U-förmigen Querschnitt, offen zum zentralen Teil (10) des festen Profilelementes (1),
- erste und zweite Seitenflanken (21), (22), die in Richtung des zentralen Teils des festen Profilelementes führen,
- erste und zweite Flügel (23), (24), die einander gegenüber liegend vom unteren Teil der ersten und zweiten Seitenflanke aus verlaufen,
- eine Verbindungsplatte (3), die an einem Ende einen Vorsprung (30) aufweist, der durch den zentralen Abschnitt des beweglichen Profilelementes hindurchführt, um die Befestigung eines zu bewegenden Elements sicherzustellen und, an seinem anderen Ende einen zwischen die beiden Seitenflanken des beweglichen Profilelementes eingesetzten Eindringabschnitt (40),
**dadurch gekennzeichnet, dass** der Eindringabschnitt (40) der Verbindungsplatte an dem beweglichen Profilelement (2) befestigt ist, dort, wo der untere Teil der Seitenflanken dieses beweglichen Profilelementes und die Flügel dieses Profilelementes über eine kontinuierliche Schweißung verbunden sind, die von einer Unterkante einer Seitenflanken zur Unterkante der anderen Seitenflanke führt.

2. Gleitschiene nach Anspruch 1, **dadurch gekennzeichnet, dass** die Schweißung eine oder mehrere Schweißnähte enthält.

3. Gleitschiene nach Anspruch 2, **dadurch gekennzeichnet, dass** es sich um Schweißungen vom Typ MIG, MAG, TIG oder LASER handelt, mit oder ohne Schweißzusatz.

4. Gleitschiene nach irgendeinem der vorstehenden Ansprüche, bei dem der vorspringende Teil einen Absatz (42) umfasst, der als Endanschlag für die Gleitschiene dient.

5. Verfahren zur Herstellung einer Gleitschiene nach einem der vorhergehenden Ansprüche, bei dem die folgenden Arbeitsgänge durchgeführt werden:
- Pressen eines Profilelementes (1), des sogenannten festen Profilelementes, das an einem Rahmen befestigt werden soll;
- Pressen eines Profilelementes (2), des sogenannten beweglichen Profilelemente, das an einem zu bewegenden Element befestigt werden soll ;
- Pressen einer Verbindungsplatte,
- Positionierung des beweglichen Profilelementes auf einem Montagewerkzeug, mit dem die beiden Flügel in einem genauen Abstandsmaß gehalten werden,
- Einführung der Verbindungsplatte in den zentralen Teil des beweglichen Profilelementes, durch eine Bewegung, im Wesentlichen senkrecht zur Längsachse (X), das untere Endstück des Eindringteils der Verbindungsplatte befindet sich dabei in Höhe der Verbindung zwischen den Flügeln und dem unteren Teil der Flanken des beweglichen Profilelementes,
- Ausführung mindestens einer kontinuierlichen Schweißnaht in Höhe der Verbindung,
- Entnahme der geschweißten Baugruppe aus dem Montagewerkzeug;

6. Verfahren laut Anspruch 5, bei dem mindestens zwei Schweißnähte ausgeführt werden, eine an jedem seitlichen Endstück, entlang der Achse X, des vorspringenden Teils.

## Claims

1. Slide comprising a fixed profile (1) intended to be secured onto a frame and extending along a longitudinal axis (X), said fixed profile (1) having a central part (10) and two lateral parts (11), (12); a movable profile (2) intended to be fixed to an element to be moved and guided by the fixed profile along the longitudinal axis (X), this movable profile (2) comprising:
- a central section (20) central U-shaped section open towards the central part (10) of the first profile (1)
- first and second side flanks (21), (22) extending in the direction of the central part of the fixed profile,
- first and second flanges (23), (24) extending opposite to one another, from the lower part of the first and second side flanks
- a connecting plate (3) provided at one end with a projecting part (30) passing through the central part of the movable profile to secure an element to be moved and, at its other end, a penetrating part (40) inserted between two flanks of the mobile profile,
**characterized in that** the penetrating part (40) of the connecting plate is secured to the movable profile (2) at the junction of the lower part of the lateral flanks of the movable profile and flanges of this profile by continuous welding of a lower edge of one lateral flank to the lower edge of the other side flank.

2. Slide according to claim 1, **characterized in that** the weld comprises one or more weld joints.

3. Slide according to claim 2, **characterized in that** the weld(s) are of the MIG, MAG, TIG or LASER type, with or without filler.

4. Slide according to one of the preceding claims, in which the projecting part comprises a heel (42) serving as an end stop for the slide.

5. Method for manufacturing a slide according to one of the preceding claims, in which the following operations are carried out:
- pressing of a profile (1) called a fixed profile, intended to be fixed on a frame,
- pressing a profile (2) called mobile profile, said movable profile being intended to be fixed to an element to be moved,
- pressing of a connecting plate
- positioning on a assembly tool the movable profile, in order to maintain the two flanges at a precise spacing,
- inserting the connecting plate into the central part of the movable profile by a movement substantially perpendicular to the longitudinal axis (X), the lower end of the penetrating part of the connecting plate coming at the junction between the flanges and the lower part of the flanks of the movable profile,
- making of at least one continuous weld joint at the junction,
- extracting the welded assembly from the assembly tool.

6. Method according to claim 5 wherein at least two weld joints are provided at each lateral end along the X-axis of the projection.
